# DEMANDE DE BREVET EUROPEEN

(11) **EP 3 109 988 A1**
(43) Date de publication de la demande: **28.12.2016**
(21) Numéro de dépôt: 15193792.7
(22) Date de dépôt: 10.11.2015
(51) Int. Cl.: H02M 1/36, H02M 7/12, H02M 1/32

(54) **CONVERTISSEUR A CIRCUIT CORRECTEUR DU FACTEUR DE PUISSANCE**

(30) Priorité: 22.06.2015 FR 1555691
(71) Demandeur: STMicroelectronics (Tours) SAS, 37100 Tours (FR)
(72) Inventeur: GONTHIER, Laurent, 37000 Tours (FR)
(74) Mandataire: Thibon, Laurent

(57) **Abrégé**

L'invention concerne un convertisseur alternatif-continu comportant : une première borne (12) et une deuxième borne (14), destinées à recevoir une tension alternative (Vac) ; une troisième borne (16) et une quatrième borne (18), destinées à fournir une tension continue (Vdc) ; deux commutateurs (T1, T2) en série entre les troisième et quatrième bornes, dont le point milieu (32) est connecté à la première borne (12) ; et deux éléments de redressements (Th1, Th2) commandables en série entre les troisième et quatrième bornes, dont le point milieu (34) est connecté à la première borne ou à la deuxième borne (14).

## Description

### Domaine

La présente description concerne de façon générale les dispositifs électroniques et, plus particulièrement, les convertisseurs alternatif-continu. La présente description concerne plus particulièrement un convertisseur équipé d'une fonction de correction du facteur de puissance (PFC - Power Factor Correction) et s'applique de façon générale à tout système utilisant un tel convertisseur, par exemple les circuits de commande de moteurs électriques, les chargeurs électriques, les alimentations à découpage, etc.

### Exposé de l'art antérieur

On connait de nombreuses architectures de convertisseurs alternatif-continu, basées sur des éléments de redressement commandables (thyristors, par exemple) ou non (diodes), montés en pont redresseur, alimentés par une tension alternative et fournissant une tension continue, cette tension continue étant le cas échéant elle-même reconvertie en tension alternative.

Parmi ces architectures, une solution utilisant un bras d'onduleur complet et un autre bras à diodes (généralement désignée par son appellation anglo-saxonne "totem pole") est une architecture sans pont basée sur deux commutateurs commandés en modulation de largeurs d'impulsions.

Le document EP-A-2515420 décrit un exemple de convertisseur à correction du facteur de puissance de type "totem pole".

On souhaite généralement limiter le courant d'appel, c'est-à-dire les pics de courant qui se produisent à chaque alternance de la tension alternative tant que la tension aux bornes d'un condensateur en sortie n'a pas atteint un niveau suffisant et ceci notamment dans les phases de démarrage.

### Résumé

Un mode de réalisation pallie tout ou partie des inconvénients des circuits usuels de commande d'un convertisseur de puissance.

Un mode de réalisation propose un convertisseur de puissance à correction du facteur de puissance de type "totem pole".

Ainsi, un mode de réalisation prévoit un convertisseur alternatif-continu comportant :
une première borne et une deuxième borne, destinées à recevoir une tension alternative ;
une troisième borne et une quatrième borne, destinées à fournir une tension continue ;
deux commutateurs en série entre les troisième et quatrième bornes, dont le point milieu est connecté à la première borne ; et
deux éléments de redressement commandables en série entre les troisième et quatrième bornes, dont le point milieu est connecté à la première borne ou à la deuxième borne.

Selon un mode de réalisation, deux diodes sont respectivement connectées en parallèle avec chacun des deux commutateurs.

Selon un mode de réalisation, lesdites deux diodes sont formées par les diodes intrinsèques des commutateurs.

Selon un mode de réalisation, les éléments de redressement sont commandés en angle de phase.

Selon un mode de réalisation, les deux éléments de redressement sont respectivement des thyristors à gâchette de cathode et à gâchette d'anode, le thyristor à gâchette d'anode étant commandable par extraction d'un courant de sa gâchette.

Selon un mode de réalisation, le thyristor à gâchette d'anode est connecté à la troisième borne.

Selon un mode de réalisation, les thyristors sont commandés par un même signal impulsionnel.

Selon un mode de réalisation, le thyristor à gâchette d'anode est connecté à la quatrième borne, le thyristor à gâchette de cathode étant connecté à la troisième borne et étant commandable par injection et/ou extraction d'un courant de gâchette.

Selon un mode de réalisation, les éléments de redressement sont des thyristors à gâchette d'anode, commandables par extraction d'un courant de leur gâchette.

Un mode de réalisation prévoit un convertisseur, comportant en outre :
un circuit d'alimentation d'un circuit de commande d'au moins les éléments de redressement commandables ; et
au moins une diode reliant l'une des première et deuxième bornes audit circuit d'alimentation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un exemple d'architecture usuelle de convertisseur alternatif-continu dit "totem-pole" à correction du facteur de puissance ;
la figure 2 représente, de façon schématique, un mode de réalisation d'un convertisseur alternatif-continu "totem-pole" ;
la figure 3 est un schéma électrique partiel d'un mode de réalisation d'un circuit de commande d'éléments de redressement commandables du convertisseur de la figure 2 ;
la figure 4 représente, de façon schématique et partielle, un autre mode de réalisation d'un convertisseur alternatif-continu "totem-pole" ;
la figure 5 représente, de façon schématique et partielle, encore un autre mode de réalisation d'un convertisseur alternatif-continu "totem-pole" ;
la figure 6 représente, de façon schématique et partielle, encore un autre mode de réalisation ;
la figure 7 est une vue en coupe schématique de réalisation d'un thyristor à gâchette de cathode à courant de gâchette positif ; et
la figure 8 est une vue en coupe schématique de réalisation d'un thyristor à gâchette de cathode à courant de gâchette négatif.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les circuits alimentés par le convertisseur de puissance n'ont pas été détaillés, les modes de réalisation décrits étant compatibles avec les applications usuelles. Dans la description, le terme "connecté" désigne une connexion directe entre deux éléments, alors que les termes "couplé" et "relié" désignent une connexion entre deux éléments qui peut être directe ou par l'intermédiaire d'un ou plusieurs autres éléments. Lorsque l'on fait référence aux termes "environ", "approximativement" ou "de l'ordre de", cela signifie à 10 % près, de préférence à 5 % près.

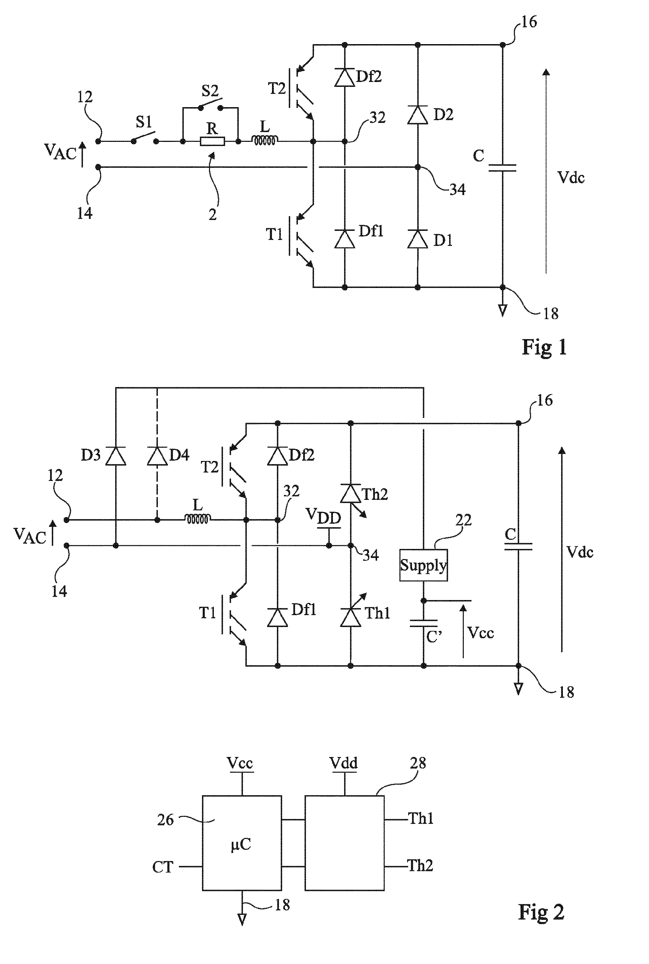

La figure 1 représente, de façon schématique, un exemple d'architecture usuelle de convertisseur alternatif-continu "totem pole" équipé d'un circuit de limitation du courant d'appel.

Deux bornes d'entrée 12 et 14 sont destinées à recevoir une tension alternative Vac, par exemple, la tension du réseau de distribution électrique (par exemple 230 ou 120 volts, 50 ou 60 Hz). La borne 12 est reliée, par l'intermédiaire d'un montage 2 limiteur de courant d'appel, à une première borne d'un élément inductif L, dont une deuxième borne est reliée au point milieu 32 d'une association en série de deux commutateurs T2 et T1 entre deux bornes 16 et 18, de fourniture d'une tension continue Vdc, la borne 18 définissant un potentiel de référence, typiquement la masse. Deux diodes Df1 et Df2 sont également en série entre les bornes 16 et 18 et ont le point milieu de leur association en série connecté au noeud 32, l'anode de la borne Df1 étant connectée à la borne 18 tandis que la cathode de la diode Df2 est connectée à la borne 16. La borne 14 est connectée au point milieu 34 d'une association en série de deux diodes D1 et D2 entre les bornes 16 et 18, l'anode de la diode D1 étant connectée à la borne 18 tandis que la cathode de la diode D2 est connectée à la borne 16. Un condensateur C de stockage et lissage connecte les bornes 16 et 18. Enfin, un interrupteur de mise en service S1 est intercalé entre la borne 12 et le circuit 2.

Le circuit 2 de limitation du courant d'appel est constitué d'une résistance R reliant (par l'interrupteur S1) la borne 12 au noeud 32 afin de limiter le courant d'appel au démarrage du convertisseur (quand le condensateur C est déchargé). Un interrupteur S2 court-circuite la résistance R en régime établi et limite ainsi les pertes de cette résistance lorsque le condensateur est chargé.

Pendant les alternances positives de la tension Vac, l'interrupteur T2 reste ouvert. La diode D1 conduit et couple la borne 18, c'est-à-dire le potentiel de référence de la tension de sortie Vdc, à la borne 14. Le commutateur T1 est commandé en modulation de largeur d'impulsions et la diode Df2 sert de diode de roue libre pendant les périodes où l'interrupteur T1 est ouvert. Pendant les alternances négatives, l'interrupteur T1 reste ouvert. La diode D2 conduit et couple la borne 14 à la borne 16, c'est-à-dire au potentiel haut de la tension de sortie Vdc. Le commutateur T2 est commandé en modulation de largeur d'impulsions et la diode Df1 sert de diode de roue libre pendant les périodes où l'interrupteur T2 est ouvert.

La figure 2 représente, de façon schématique, un mode de réalisation d'un convertisseur alternatif-continu "totem pole" à limitation de courant.

Par rapport au montage de la figure 1, les diodes D1 et D2 sont remplacées par des thyristors Th1 et Th2. Dans l'exemple de la figure 2, le thyristor Th1 est à gâchette de cathode et a son anode connectée à la borne 18 tandis que le thyristor Th2 est à gâchette d'anode et a sa cathode connectée à la borne 16.

L'utilisation des thyristors Th1 et Th2 rend possible une commande en angle de phase, mis en conduction en retard par rapport au zéro de la tension Vac redressée, ce qui permet de limiter les courants d'appel au démarrage en effectuant un démarrage en douceur (Soft Start). La durée de conduction des thyristors est augmentée progressivement afin d'assurer une charge progressive du condensateur C. Ainsi, le circuit 2 de la figure 1 n'est plus nécessaire.

En régime établi, les thyristors Th1 et Th2 sont rendus conducteurs respectivement pendant les alternances positives et négatives de façon à retrouver la fonction des diodes D1 et D2 de la figure 1.

Selon les modes de réalisation, on conserve ou non l'interrupteur S1 de mise en veille du convertisseur.

Dans l'exemple de la figure 2, on prévoit de supprimer l'interrupteur S1 et de tirer profit de la présence des thyristors Th1 et Th2 pour ouvrir toutes les branches de conduction lors des périodes de mise en veille du convertisseur.

Pour préserver une alimentation permettant le redémarrage, on prévoit alors un circuit 22 (Supply) de génération d'une tension continue Vcc aux bornes d'un condensateur C' afin d'alimenter un circuit électronique 26, par exemple, un microcontrôleur (µC) chargé de générer des impulsions de commande des thyristors Th1 et Th2. Une diode D3 connecte l'une des bornes 12 et 14 au circuit 22 pour effectuer un redressement mono alternance. Le cas échéant, une diode D4 connecte (liaison en pointillés en figure 2) l'autre des bornes 12 et 14 au circuit 22 pour un redressement double alternance.

Si l'interrupteur S1 est conservé, sa mise en conduction déclenche l'alimentation du circuit 22.

Le microcontrôleur 26 contrôle les gâchettes des thyristors Th1 et Th2 par le biais d'un ou deux coupleurs isolés 28 de technologie optique, magnétique ou capacitive. Le microcontrôleur 26 reçoit différentes consignes CT ou mesures afin de fermer les thyristors Th1 et Th2 aux bons moments pour la commande en pleine onde en régime établi.

Dans le mode de réalisation de la figure 2, les thyristors Th1 et Th2 sont choisis de manière que leur commande soit référencée au même point. Ainsi, le thyristor Th2 est un thyristor à gâchette d'anode. Sa commande est donc référencée à la borne 34. Le thyristor Th1 est un thyristor à gâchette de cathode. Sa commande est donc référencée à la même borne 34. Les thyristors Th2 et Th1 sont choisis pour fonctionner tous les deux par extraction de courant de gâchette. Ce mode de réalisation permet une commande des deux thyristors en utilisant une seule alimentation auxiliaire dont la borne positive (Vdd) est connectée à la borne 34.

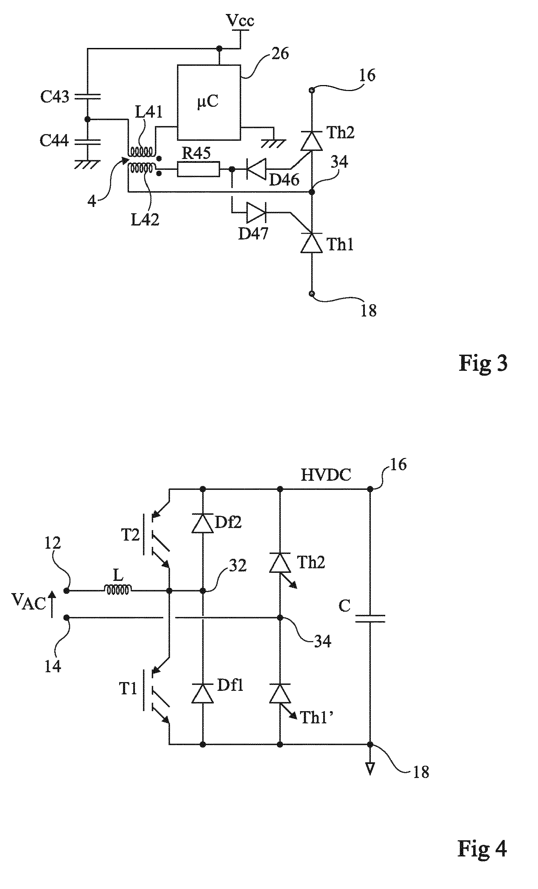

La figure 3 représente, partiellement, un autre mode de réalisation d'un convertisseur de puissance et de son circuit de commande des thyristors Th1 et Th2.

Les thyristors Th1 et Th2 sont également choisis ici de manière que leur commande soit référencée au même point. Ainsi, le thyristor Th2 est un thyristor à gâchette d'anode. Sa commande est donc référencée par rapport à la borne 34. Le thyristor Th1 est un thyristor à gâchette de cathode. Sa commande est donc référencée par rapport à la même borne 34. Les thyristors Th2 et Th1 sont choisis pour fonctionner respectivement par extraction de courant de gâchette et par injection de courant de gâchette.

Dans ce circuit de la figure 3, un premier enroulement L41 d'un transformateur 4 reçoit une commande impulsionnelle d'un microcontrôleur 26 alimenté par une tension continue Vcc (par exemple fournie par le circuit 22 (figure 2)). L'autre extrémité de l'enroulement L41 est reliée au point milieu d'une association en série de deux éléments capacitifs C43 et C44 entre la borne d'alimentation Vcc et la masse. Un deuxième enroulement L42 du transformateur 4 a une extrémité connectée à la borne 34 et son autre extrémité couplée aux gâchettes des thyristors Th1 et Th2. Ce couplage est réalisé par l'intermédiaire d'une résistance série R45 optionnelle et de deux diodes D46 et D47 connectant respectivement l'enroulement L42 (ou la résistance R45) aux gâchettes des thyristors Th2 et Th1. La gâchette d'anode du thyristor Th2 est connectée à l'anode de la diode D46 tandis que la gâchette de cathode du thyristor Th1 est reliée à la cathode de la diode D47, la cathode de la diode D46 et l'anode de la diode D47 étant connectées à l'enroulement L42 (ou à la résistance R45).

Le circuit de la figure 3 permet donc d'injecter à la fois un courant de gâchette au thyristor Th1, et d'extraire un courant de gâchette du thyristor Th2. Les deux thyristors sont donc commandés à chaque fois qu'une impulsion alternative (de type +Vcc/2 -Vcc/2) est appliquée au primaire L41 du transformateur 4.

Pour ne commander le thyristor Th2 que lors des demi-alternances positives de la tension Vac, et le thyristor Th1 que lors des demi-alternances négatives de la tension Vac, on applique aux bornes de l'inductance L41 respectivement pendant ces deux types de demi-alternances, un signal de type -Vcc / 0 (pour amorcer le thyristor Th2), et un signal de type +Vcc / 0 (pour amorcer le thyristor Th1). De tels signaux disposant d'une composante continue, le transformateur 4 ne devra pas disposer de matériau magnétique saturable afin d'éviter la saturation de ce matériau et assurer le bon fonctionnement du transfert des signaux de commande. On pourra ainsi par exemple utiliser un transformateur sans noyau magnétique (ou "transformateur à air").

La figure 4 représente, partiellement, un autre mode de réalisation, dans lequel les thyristors Th1' et Th2 sont tous les deux à gâchette d'anode. Le thyristor Th1' peut être commandé directement par une sortie du microcontrôleur (26, figure 2). Le thyristor Th2 est commandé à partir de la tension Vac ou à partir d'une tension continue HVDC dès lors que le thyristor Th2 est passant.

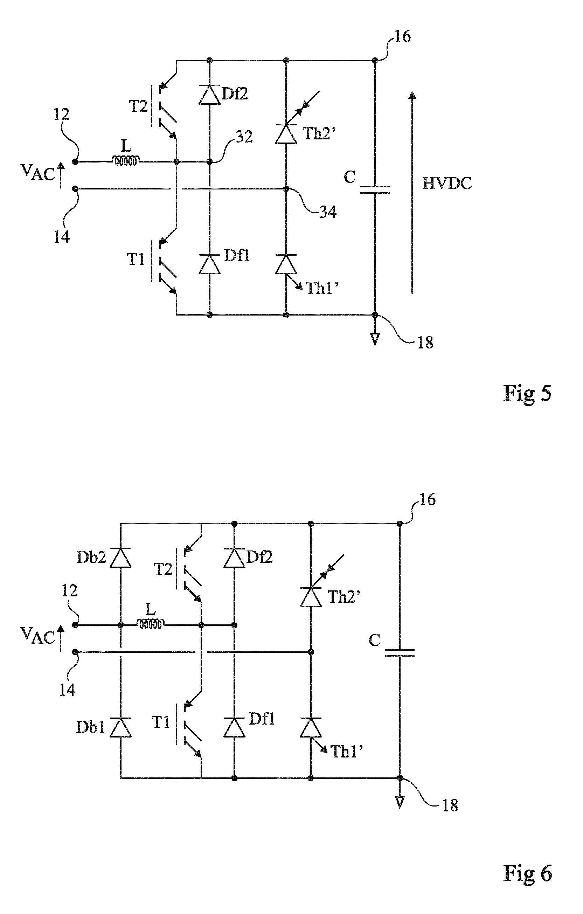

La figure 5 représente, partiellement, encore un autre mode de réalisation, dans lequel les thyristors Th1' et Th2' sont respectivement à gâchette d'anode et à gâchette de cathode, le thyristor Th2' pouvant être commandé par injection et extraction de courant de gâchette, c'est-à-dire à la fois par un courant de gâchette positif et par un courant de gâchette négatif. Le thyristor Th1' peut être commandé directement par une sortie du microcontrôleur (26, figure 2). Le thyristor Th2' peut également être commandé à partir du microcontrôleur lorsque le condensateur n'est pas ou faiblement chargé et à partir d'une tension continue référencée au potentiel haut de la tension d'alimentation, par exemple la tension HVDC présente entre les bornes 16 et 18.

La figure 6 représente, partiellement, encore un autre mode de réalisation, dans lequel des diodes Db1 et Db2 relient directement respectivement la borne 18 à la borne 12 et la borne 12 à la borne 16. Le rôle de ces diodes est de court-circuiter (et de protéger) respectivement les diodes Df1 et Df2 en cas de surcourant provenant d'une surtension de la tension Vac. Les diodes Db1 et Db2 peuvent être remplacées par des thyristors à gâchette de cathode, respectivement commandés en même temps que les thyristors Th1' et Th2'. Ces thyristors supplémentaires peuvent en variante être commandés par des diodes Zener reliant, en série avec une diode de polarité opposée, leur gâchette respective à la borne 12 ou à la borne 18.

La réalisation d'une fonction thyristor à gâchette de cathode, commandable par extraction de courant est connue. On peut par exemple utiliser un triac en série avec une diode pour le rendre unidirectionnel.

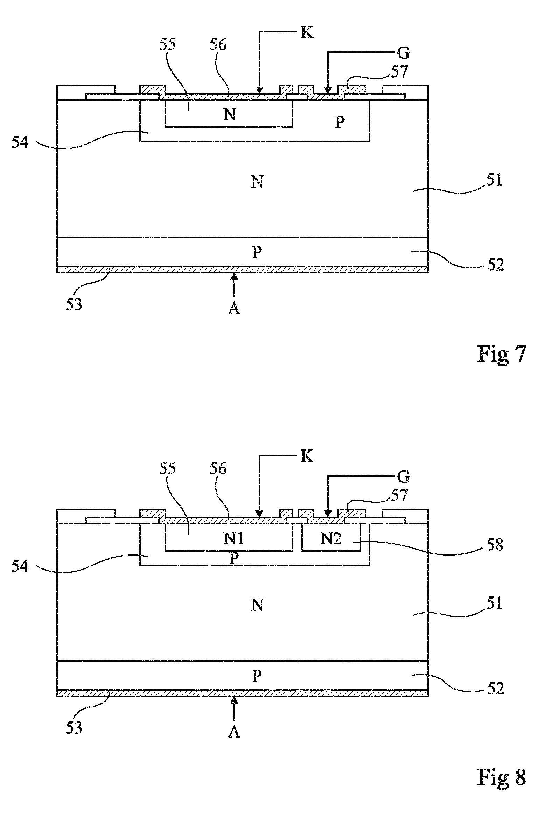

Les figures 7 et 8 sont des coupes schématiques de réalisation de thyristors à gâchette de cathode respectivement à courant de gâchette positif ou injection de courant (cas le plus courant) et à courant de gâchette négatif ou extraction de courant.

Selon ces exemples, le thyristor est réalisé dans un substrat 51 de type N. En face arrière, une couche 52 de type P définit une région d'anode, l'électrode d'anode A étant obtenue par une métallisation 53 de reprise de contact de cette région 52. Un caisson 54 de type P est réalisé en face avant. Une région de cathode 55 de type N (N1) est formée dans ce caisson 54 et une métallisation 56 de reprise de contact de cette région 55 définit l'électrode de cathode K.

Dans le cas de la figure 7, un contact 57 de gâchette est réalisé au niveau du caisson de type P 54. Ainsi, l'injection d'un courant de gâchette amorce le thyristor si celui-ci est convenablement polarisé (tension anode-cathode positive).

Dans le cas de la figure 8, une région 58 de type N (N2) est ajoutée sous le contact 57 de gâchette. Cette région 58 permet un amorçage par un courant de gâchette négatif (c'est-à-dire circulant depuis la cathode K jusqu'à la gâchette G) en autorisant une injection d'électrons dans le substrat 51 de type N qui correspond à la base du transistor bipolaire de type PNP formé par les régions 52-51-54.

La réalisation des thyristors à gâchette d'anode se déduit des exemples ci-dessus des figures 7 et 8.

En variante, la région 58 peut être scindée au moins en deux afin de permettre un contact direct de la région P (54) sur la gâchette. Une telle variante, appelée "trou de court-circuit" permet d'améliorer l'immunité aux transitoires de tension du thyristor et permet aussi la commande par un courant de gâchette positif (c'est-à-dire circulant depuis la gâchette G jusqu'à la cathode K). Cette variante permet donc à ce thyristor d'être utilisé au niveau du composant Th2' dans le circuit de la figure 5.

Un avantage des modes de réalisation qui ont été décrits est de conserver le rendement élevé d'une architecture "totem pole" tout en supprimant la résistance de limitation du courant d'appel.

De même, les solutions décrites préservent un faible bruit de mode commun, la borne au potentiel de référence (généralement le bus de masse) étant commutée à la fréquence de l'alimentation alternative et non à celle des impulsions de commande des commutateurs T1 et T2.

Par ailleurs, pour le cas où des composants de type triac sont présents côté tension alternative, les thyristors peuvent être alimentés par la tension Vdd, dite « négative » utilisée pour commander ces triacs.

Les réalisations décrites sont compatibles avec les structures habituelles choisies pour les composants T1, T2, Df1 et Df2 dans une architecture "totem pole". Par exemple, les commutateurs T1 et T2 sont des transistors de puissance. Selon un autre exemple, les diodes Df1 et Df2 sont formées des diodes intrinsèques de transistors MOSFET en Silicium, Carbure de Silicium, ou autre technologie.

Divers modes de réalisation ont été décrits. Diverses variantes et modifications apparaîtront à l'homme de l'art. Par exemple, les thyristors peuvent être remplacés par des triacs, chacun en série avec une diode.

Par ailleurs, toute variante de thyristor à gâchette de cathode ou à gâchette d'anode, à commande par injection ou extraction de courant de gâchette, pourra être utilisée à la place des thyristors Th, Th2, Th1' et Th2'. Par exemple, le circuit de la figure 5 pourrait utiliser un thyristor à gâchette de cathode à commande par injection de courant uniquement, dès lors qu'un coupleur isolé est utilisé pour commander ce thyristor Th2'.

De plus, la mise en oeuvre pratique des modes de réalisation qui ont été décrits est à la portée de l'homme du métier à partir des indications fonctionnelles données ci-dessus. En particulier, la programmation du microcontrôleur dépend de l'application et les réalisations décrites sont compatibles avec les applications usuelles utilisant un microcontrôleur ou équivalent pour commander un convertisseur.

## Revendications

1. Convertisseur alternatif-continu comportant :
une première borne (12) et une deuxième borne (14), destinées à recevoir une tension alternative (Vac) ;
une troisième borne (16) et une quatrième borne (18), destinées à fournir une tension continue (Vdc) ;
deux commutateurs (T1, T2) en série entre les troisième et quatrième bornes, dont le point milieu (32) est connecté à la première borne (12) ; et
deux éléments de redressement (Th1, Th2 ; Th1', Th2 ; Th1', Th2') commandables en série entre les troisième et quatrième bornes, dont le point milieu (34) est connecté à la première borne (12) ou à la deuxième borne (14).

2. Convertisseur selon la revendication 1, dans lequel deux diodes (Df1, Df2) sont respectivement connectées en parallèle avec chacun des deux commutateurs (T1, T2).

3. Convertisseur selon la revendication 2, dans lequel lesdites deux diodes sont formées par les diodes intrinsèques des commutateurs (T1, T2).

4. Convertisseur selon l'une quelconque des revendications 1 à 3, dans lequel les éléments de redressement (Th1, Th2 ; Th1', Th2 ; Th1', Th2') sont commandés en angle de phase.

5. Convertisseur selon l'une quelconque des revendications 1 à 4, dans lequel les deux éléments de redressement sont respectivement des thyristors à gâchette de cathode (Th1 ; Th2') et à gâchette d'anode (Th2 ; Th1'), le thyristor à gâchette d'anode (Th2 ; Th1') étant commandable par extraction d'un courant de sa gâchette.

6. Convertisseur selon la revendication 5, dans lequel le thyristor à gâchette d'anode (Th2) est connecté à la troisième borne (16).

7. Convertisseur selon la revendication 6, dans lequel les thyristors (Th1, Th2) sont commandés par un même signal impulsionnel.

8. Convertisseur selon la revendication 5, dans lequel le thyristor à gâchette d'anode (Th1') est connecté à la quatrième borne (18), le thyristor à gâchette de cathode (Th2') étant connecté à la troisième borne (16) et étant commandable par injection et/ou extraction d'un courant de gâchette.

9. Convertisseur selon l'une quelconque des revendications 1 à 4, dans lequel les éléments de redressement sont des thyristors à gâchette d'anode (Th2, Th1'), commandables par extraction d'un courant de leur gâchette.

10. Convertisseur selon l'une quelconque des revendications 1 à 9, comportant en outre :
un circuit d'alimentation (22) d'un circuit de commande (26) d'au moins les éléments de redressement commandables (Th1, Th2 ; Th1', Th2 ; Th1', Th2') ; et
au moins une diode (D3) reliant l'une des première et deuxième bornes (12, 14) audit circuit d'alimentation.
